# EUROPEAN PATENT APPLICATION

(11) **EP 2 524 854 A2**
(43) Date of publication of application: **21.11.2012**
(21) Application number: 12168759.4
(22) Date of filing: 21.05.2012
(51) Int. Cl.: B62B 9/26, B62K 3/00

(54) **Carriage device**

(30) Priority: 19.05.2011 GB 201108428; 06.10.2011 GB 201117271
(71) Applicant: Burley, Claire, Winchester Hampshire SO22 5BW (GB)
(72) Inventor: Burley, Claire, Winchester Hampshire SO22 5BW (GB)
(74) Representative: Games, Robert Harland

(57) **Abstract**

A carriage device (10) for attaching a scooter to a handle of a pushchair, the carriage device (10) comprises a body portion (12), releasable fastening means (14) including a strap extending along at least a proportion of the body portion adapted to releasably fasten the body portion (12) to the pushchair handle, and a curved support portion (1)6 for securing and supporting a handle of a scooter.

## Description

The present invention relates to a carriage device and particularly but not exclusively to a carriage device for a pram, pushchair, buggy or stroller.

### BACKGROUND TO THE INVENTION

Scooters for children are increasingly popular and it is common for children to take their scooters with them when they are out with their parents or carers, for example, when on a school run. It is not uncommon for a child to require breaks from the scooter during a journey, or for a carer to be left with the scooter of the child at school after a school run. An idle scooter can present difficulties for the carer, particularly when the carer has a pushchair.

Typically, the carer can rest the scooter on top of the hood of the pushchair. When the scooter is stored in this way, the hood may need to be folded back to provide an area on which the scooter may be rested. This may be uncomfortable for the child in the pushchair, especially if it is raining or windy. Furthermore, the scooter may slip off, for example, when going up and down kerbs, or simply when the scooter becomes unstable on the pushchair. This may cause injury to the child in the pushchair, the carer or even a passerby. Also, when the scooter is rested on a pushchair, the ends of the scooter, due to its length, tend to stick out prominently from the sides of the pushchair, making the pushchair cumbersome to manoeuvre around tight spaces and causing inconvenience to other pedestrians. To ensure the scooter does not slip off the pushchair, the carer may need to keep one hand on the scooter to keep it in position, making the pushchair even harder for the carer to manoeuvre and distracting the carer from paying full attention to the child or children in their care.

JP2011168256A discloses a support bar having two depending hooks for supporting items from a pushchair. The support bar loosely drops into cradles at either end, the cradles being clamped to substantially vertical portions of the pushchair frame. The device of JP2011168256A, although it can be moved to a different vertical height, can only be attached to the pushchair frame in the above described configuration. Since the support bar must be cradled and must be substantially horizontal, flexibility in positioning the support bar is severely limited. A scooter may be hung from one or more of the depending hooks, but the scooter would then hang behind the pushchair, substantially in a central portion in line with the handle, where it is prone to obstruct the pusher of the chair. Alternatively, a folded scooter might be placed substantially horizontally across the depending hooks. However, in this position it would be likely to protrude beyond the sides of the pushchair, causing a potential hazard to other pedestrians.

It is an object of the invention to provide a carriage device, for example, for a pram, pushchair, buggy or stroller, which substantially mitigates or reduces these problems.

### STATEMENT OF INVENTION

According to the present invention there is provided a carriage device for attaching a scooter to a handle of a pushchair, the carriage device comprising a body portion, a curved support portion and releasable fastening means; the body portion have two substantially parallel contact areas, the contact areas being spaced apart for resting against the pushchair handle, the curved support portion forming a hook for securing and supporting the handle of a scooter, and the releasable fastening means including a strap extending along at least a proportion of the body portion, the strap being provided with a fastener for releasably fastening the body portion to the pushchair handle.

The carriage device is advantageous because by utilising the carriage device, the scooter can be supported on the pushchair safely and securely. The releasable nature of the fastening means allows the carriage device to be used on most pushchairs and to be fastened anywhere along the pushchair handle. Furthermore, the carriage device can be removed from one pushchair and attached to another, making it suitable for users who change the pushchair they use from time to time.

The carriage device allows the scooter to simply hang from the carriage device and reduces the extent to which the scooter protrudes from the side of the pushchair. The curved support portion is shaped to complement, and to be in contact with, at least part of a circumference of the handle of the scooter, for supporting the scooter to the carriage device. When manoeuvring around uneven road surfaces, the shape of the curved support portion helps to retain the handle of the scooter and reduces the likelihood of it from being dislodged. Furthermore, as the scooter is not rested on top of the hood, the hood is free to extend out for use, as and when required. Advantageously, the strap allows the carriage device to be attached to handles of different cross-sectional shapes, such as circular or oval.

The two spaced apart parallel contact areas may be a short distance apart, for contact with a single member of the pushchair frame.

The body portion may have a lip at its upper end.

The two spaced apart contact areas may be provided by two arms. The arms may extend into a U-shaped portion, the two substantially parallel contact areas forming at least part of one leg of the U-shaped portion, and a substantially linear region may extend from the other side of the U-shaped portion into the curved support portion.

The U-shaped portion provides a pivot about which the device may be elastically deformed in order to accommodate different sizes of scooter handle and to hold a scooter handle securely to a pushchair.

A longitudinal extent of the body portion may be curved in a gentle curve, the inside of the curve facing away from the curved support portion.

The gentle curve is advantageous as it ensures that the contact points between the body portion and the pushchair handle are substantially at either end of an elongate extent of the body portion. This holds the body portion stable against the pushchair handle.

The radius of curvature of the body portion may be between 130mm and 160mm, and in particular may be 145mm.

The curved support portion may include a lip extending from a tip of the curved support portion. The curved support portion may include two discrete and substantially parallel contact areas.

The lip extending from the tip of the curved support portion may serve as a grip or handle means enabling a user to remove the scooter handle from the carriage device by flexing the curved support portion away from the body portion, thereby releasing the handle and allowing it to be lifted out of the curved support portion.

The body portion may be integrally formed with the curved support portion. Integrally forming the carriage device in one piece is advantageous since it increases the strength of the product, allowing heavy scooters to be carried.

This integral formation also minimises the number of sharp edges on the carriage device, making it safe for children to handle.

The body portion and/or the curved support portion may be made from metal.
If the carriage device is formed from a single piece of wire, the join may be placed in the substantially linear upper region, i.e. beneath the releasably fastening means. It may optionally be welded.

The body portion and/or the curved support portion may be coated with plastics and/or with polyvinyl resin to act as an extra protective coating to the carriage device, making the carriage device more child-friendly.

The carriage device may include a closure member for further securing the handle of the scooter to the curved support portion.

The closure member may be releasably connected to the body portion and/or the curved support portion. Specifically, the closure member may be releasably connected to the first lip of the substantially linear upper region and/or the second lip of the curved support portion. This allows the closure member to be temporarily disconnected from the first lip and/or second lip and allows easy access to the curved support portion when placing or removing the handle of the scooter from the carriage device. Alternatively, the closure member may be permanently secured to one of the body portion and the curved support portion, specifically one of the first lip of the substantially linear upper region and the second lip of the curved support portion by a loop so that the closure member is attached to the carriage device at all times and cannot be misplaced.

The closure member may be made from rubber so that it is flexible and durable, and it may be elasticated. The releasable fastening means and/or the closure member may be provided with an area printable with indicia.

### DESCRIPTION OF THE DRAWINGS

For a better understanding of the present invention, and to show more clearly how it may be carried into effect, reference will now be made, by way of example only, to the accompanying drawings, in which:
Figure 1 shows a schematic perspective view of a first embodiment of a carriage device;
Figure 2 shows a schematic perspective view of the body portion and the curved support portion of the carriage device of Figure 1;
Figure 3 shows a schematic perspective view of the carriage device of Figure 1 in use on a handle of a pushchair;
Figure 4 shows a schematic view of two carriage devices of Figure 1 in use in two different positions on the handle of the pushchair;
Figure 5 shows a perspective view of a second embodiment of a carriage device, in which a closure member is included; and
Figure 6 shows a schematic view of two carriage devices of Figure 5 in use in two different positions on the handle of the pushchair.

### DESCRIPTION OF PREFERRED EMBODIMENT(S)

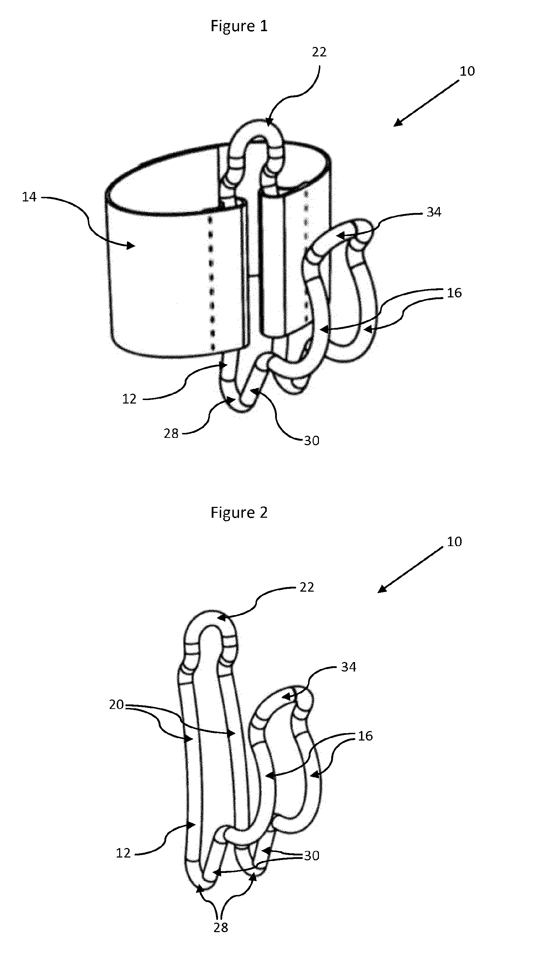

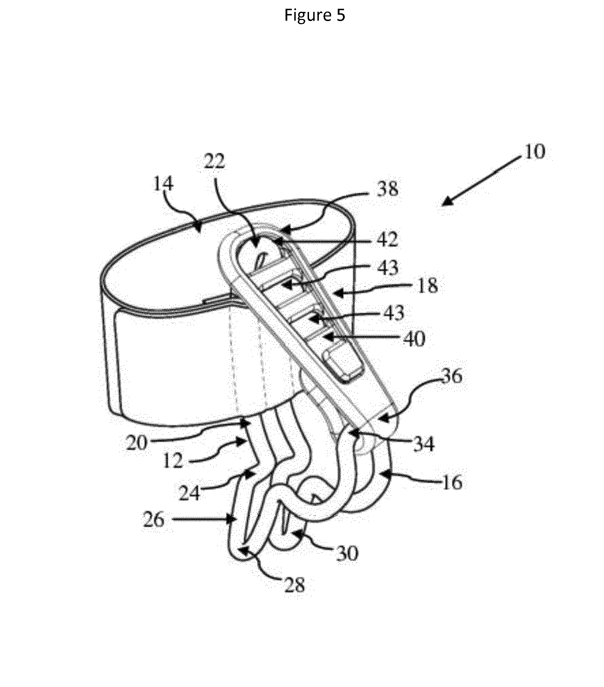

Referring firstly to Figures 1 and 2, a carriage device is indicated generally at 10. The carriage device 10 includes a body portion 12, a strap 14, and a curved support portion 16. A closure member 18 may optionally be included, as shown in Figure 5.

The body portion 12 includes two arms 20 that run spaced apart and substantially in parallel, each arm 20 providing a discrete area of contact with a pushchair handle. The arms are marginally further apart at their lower end as viewed, but can be regarded as substantially parallel. A first lip 22 is provided at one end of the two arms 20, extending upwardly and outwardly from the ends of the arms 20, joining the two arms together at their ends.

The first lip 22 is U-shaped when viewed from its front or back. When viewed from its side, each arm of the first lip 22 is dog-legged in shape, each arm extending upwardly and outwardly from the spaced apart parallel arms 20.

Where a closure member 18 is included, when the carriage device 10 is attached to a pushchair handle, the area of clearance or gap between the pushchair handle and the first lip 22 provides space for the closure member 18 to engage and disengage with the first lip 22. Furthermore, its dog-legged profile helps to prevent the closure member 18 from coming away from the first lip 22 unintentionally when in use.

The length of the body portion 12 is curved in a gentle curve, with the inside of the curve facing away from the curved support portion 16. In this embodiment, the radius of curvature is 145mm.

The two arms 20 form a leg of a U-shaped portion 28. A substantially linear region 30, which is adjacent to the curved support region 16, forms the other leg of the U-shaped portion 28. The U-shaped portion 28 has two arms running in parallel.

A second lip 34 extends outwardly from the curved support portion 16 and is substantially U-shaped when viewed from the front. Similar to the body portion 12, the curved support portion 16 has two parallel arms. The curved support portion 16 provides two parallel and discrete areas of contact for the scooter handle. The combined shape of the body portion 12 and the curved support portion 16 is broadly hook shaped, with the curved support portion 16 extending in front of at least part of the body portion 12, as seen in Figure 2. The curved support portion 16 forms a cradle which, in use, a handle of a scooter can rest in. The curved support portion 16 is shaped so that the handle of the scooter is supported on the carriage device 10. Inward bias of the curved support portion 16 towards the substantially upper linear region 20 ensures that the scooter is retained, even when manoeuvring around uneven road surfaces. The closure member 18 serves to further secure the handle in the cradle.

As seen in Figure 1, the strap 14 provides a releasable fastening means for releasably attaching the carriage device 10 to the pushchair handle. The strap 14 is attached to the body portion 12 by stitching, staples, studs, adhesive or rivets, and can be provided with an area printable with indicia. The first lip 22 and the U-shaped portion 28 act as stops for retaining the strap 14 on the two arms 20 of the body portion 12. The two sides of the strap 14 are provided with hook and eye fastening respectively, which can be wrapped round the pushchair handle and fastened together. Although hook and eye fastening is preferred, other fastening means such as clips or a buckle could be utilised.

Where a closure member 18 is provided, a first end 36 of the closure member 18 is permanently attached to the second lip 34 of the curved support portion 16 by a loop and is secured by a stud or other suitable means, such as adhesive. A second end 38 of the closure member 18 is releasably engaged on the first lip 22. It will be appreciated that the permanent engagement may be between an end of the closure member 18 and the first lip 22 and the releasable engagement between the other end of the closure member 18 and the second lip 34. Alternatively, both ends of the closure member 18 can be releasably connected to the first and second lips 22, 34 respectively. An elongate body 40 is disposed between the first and second ends 36, 38 of the closure member 18 and indicia can be printed anywhere on the elongate body 40. An aperture 42 is provided immediately adjacent the second end 38 of the closure member 18 for the first lip 22 to pass through. As seen in Figure 5, two further apertures 43 are provided on the elongate body 40, but it will be appreciated that the two further apertures 43 can be omitted, if preferred, and the elongate body 40 can be substantially planar. The closure member 18 is made from rubber and is elastic, however other suitable elastic material may be used, if desired.

The body portion 12 and the curved support portion 16 of the carriage device are preferably made from a metal, such as stainless steel, that it is rigid and durable. Both portions 12, 16 are integrally formed from a piece of metal wire to provide a single structure that is robust enough to withstand the weight of the scooter. To further improve the durability of the carriage device, the body portion 12 and the curved support portion 16 are coated with plastics or polyvinyl resin. The coating of the metal body portion 12 and the curved support portion 16 also makes the carriage device safer for children to handle. The polyvinyl resin can be produced in a range of colours to add aesthetic appeal.

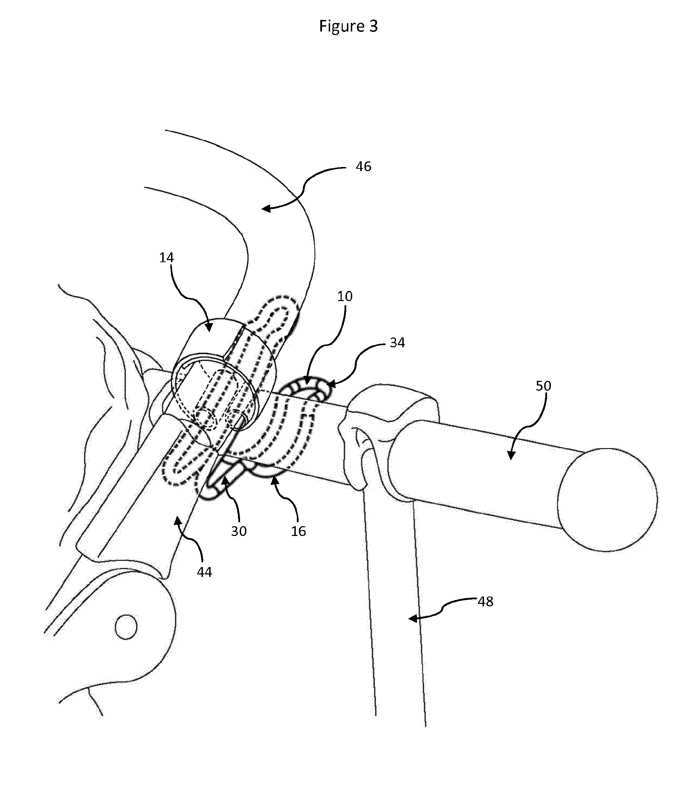

In use and as illustrated in Figures 3, 4 and 6, the carriage device 10 is releasably attached to a pushchair 44 by wrapping the strap 14 around the pushchair handle 46 and securing it via hook and eye fastening on the strap 14, the rear surface of the body portion 12 abutting the pushchair handle 46. To support the scooter 48 on the carriage device 10, the second end 38 of the closure member 18, if utilized, is temporarily disconnected or unhooked from the second lip 34, enabling a handle 50 of the scooter 48 to be placed and retained on the curved support portion 16. As the handle 46 is pushed into the carriage device 10, the handle 46 rides over the second lip 34 and into the curved support portion 16. The size of the scooter handle 46 determines the flexing movement, if any, of the curved support portion 16. The resilience or flexibility of the curved support portion 16 is determined by the thickness of the material used to produce the body portion 12 and the curved support portion 16. For example, if the body portion 12 and the curved support portion 16 are made from plastics coated steel, a material diameter of 5mm will have a small amount of resilience, whereas a diameter of 3mm to 4mm will have greater resilience. The second end 38 of the closure member 18 is then hooked back over the first lip 22. When the pushchair 44 is on the move, the scooter 48 is retained and supported on the carriage device. In use, the scooter 48 may rock a little but the shape of the curved support portion 16 helps to prevent the scooter handle 50 from lifting out of the carriage device 10.

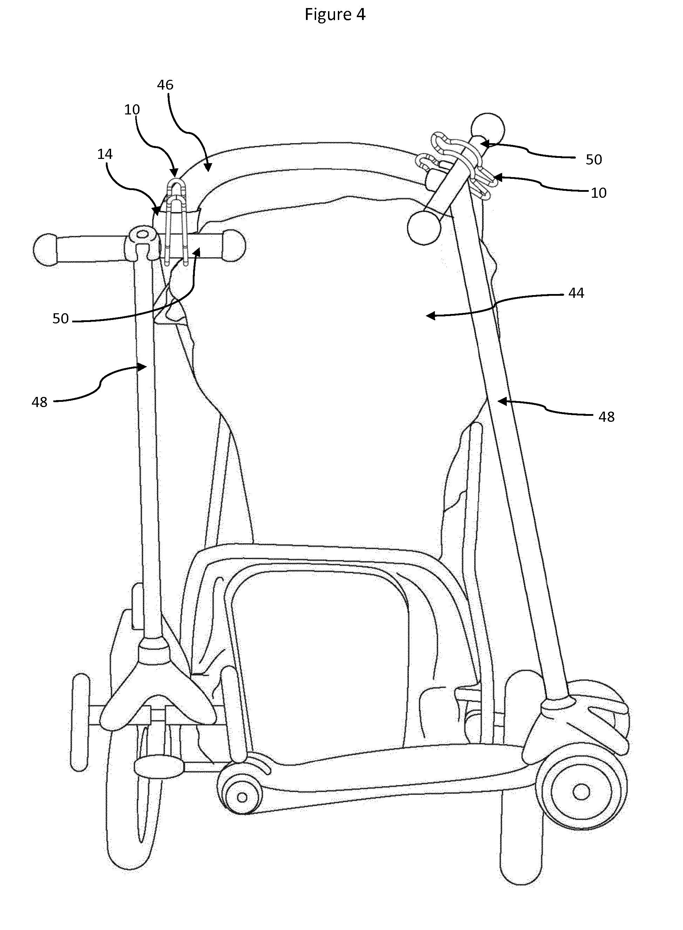

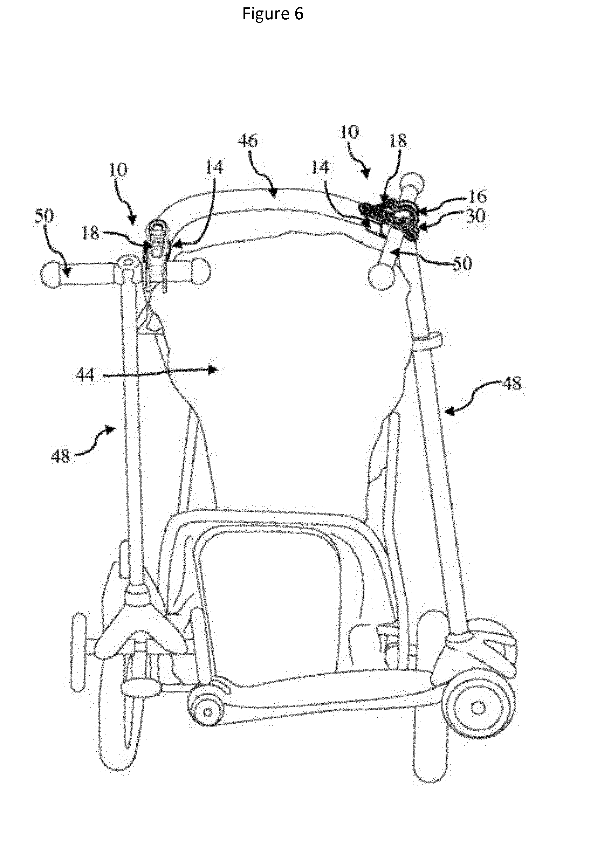

When the scooter 48 is required, a user simply needs to unhook the second end 38 of the closure member 18, if provided, from the first lip 22 and lift out the scooter 50. As shown in Figures 4 and 6, the carriage device 10 can be attached at different places on the pushchair handle 46 to suit different sizes of scooters 48 and/or pushchairs 44 and more than one carriage device 10 can be fitted onto a pushchair handle 46. At least one scooter 48 can be used on one pushchair 44. For a larger and therefore longer scooter 48, the carriage device 10 can be attached, for example, horizontally adjacent the top of the pushchair handle 46 and the scooter 48 can be positioned substantially in parallel to the back of the pushchair 44. For a smaller and therefore shorter scooter 48, the carriage device 10 can be attached vertically along the side of the pushchair handle 46 and the scooter 48 can be positioned in parallel to the side of the pushchair 44. The carriage device 10 can be removed from one pushchair handle 46 and be relocated to another pushchair handle 46 when required.

The carriage device is beneficial because it allows a scooter to be supported and carried on a pushchair safely and securely. The carriage device allows a carer the freedom to utilise both hands to manoeuvre the pushchair and hold a child's hand, and the carer is not distracted from paying attention to the child or children in their care by having to keep an eye on the scooter. The carriage device's engagement with the scooter and the pushchair are releasable therefore allowing adjustment to be made easily and flexibly. Furthermore, in use, the carriage device can be positioned to one side of the pushchair so that the ends of the scooter do not protrude out significantly from the sides of the pushchair. The carriage device is intuitive to use and both carers and children can operate the device with ease.

## Claims

1. A carriage device (10) for attaching a scooter (48) to a handle (46) of a pushchair (44), the carriage device (10) comprising a body portion (12), a curved support portion (16) and releasable fastening means (14); the body portion (12) having two substantially parallel contact areas (20), the contact areas (20) being spaced apart for resting against the pushchair handle (46), the curved support portion (16) forming a hook for securing and supporting the handle (50) of a scooter (48), and the releasable fastening means (14) including a strap extending along at least a proportion of the body portion (12), the strap being provided with a fastener for releasably fastening the body portion to the pushchair handle (46).

2. A carriage device (10) as claimed in claim 1, in which the two spaced apart parallel contact areas (20) are a short distance apart, for contact with a single member of the pushchair frame.

3. A carriage device (10) as claimed in claim 1, in which the body portion (12) has a lip (22) at its upper end.

4. A carriage device (10) as claimed in claim 1, in which the two spaced apart parallel contact areas (20) are provided by two arms.

5. A carriage device (10) as claimed in claim 4, in which the arms (20) of the body portion (12) extend into a U-shaped portion (28), the two substantially parallel contact areas (20) forming at least part of one leg of the U-shaped portion, and a substantially linear region (30) extends from the other side of the U-shaped portion (28) into the curved support portion (16).

6. A carriage device (10) as claimed in claim 1, in which a longitudinal extent of the body portion (12) is curved, the inside of the curve facing away from the curved support portion (16).

7. A carriage device (10) as claimed in claim 6, in which the radius of curvature of the body portion (12) is between around 130mm and 160mm.

8. A carriage device (10) as claimed in claim 7, in which the radius of curvature of the body portion (12) is around 145mm.

9. A carriage device (10) as claimed in claim 1, in which the curved support portion (16) includes a lip (34) extending from a tip of the curved support portion (16).

10. A carriage device (10) as claimed in claim 1, in which the curved support portion (16) includes two discrete and substantially parallel contact areas.

11. A carriage device (10) as claimed in claim 1, in which the body portion (12) is integrally formed with the curved support portion (16).

12. A carriage device (10) as claimed in claim 1, in which the body portion (12) and/or the curved support portion (16) is made from metal.

13. A carriage device (10) as claimed in claim 1, in which the body portion (12) and/or the curved support portion (16) are coated with plastics.

14. A carriage device (10) as claimed in claim 1, in which the body portion (12) and/or the curved support portion (16) are coated with polyvinyl resin.

15. A carriage device (10) as claimed in claim 1, in which the carriage device (12) includes a closure member (18).
